# DEMANDE DE BREVET EUROPEEN

(11) **EP 1 746 304 A1**
(43) Date de publication de la demande: **24.01.2007**
(21) Numéro de dépôt: 06300750.4
(22) Date de dépôt: 03.07.2006
(51) Int. Cl.: F16F 15/26

(54) **Système d'équilibrage d'un moteur à combustion par l'intermédiaire d'un équipement du moteur**

(30) Priorité: 19.07.2005 FR 0552236
(71) Demandeur: Renault SAS, 92100 Boulogne Billancourt (FR)
(72) Inventeur: Cassu, Romain, 93110 Rosny Sous Bois (FR)

(57) **Abrégé**

L'invention propose un système d'équilibrage d'un moteur à combustion (11) du type comportant deux arbres d'équilibrage (24,32) des vibrations du moteur (11) et des moyens d'entraînement en rotation en sens opposés des deux arbres d'équilibrage (24,32) par l'intermédiaire d'un équipement auxiliaire (10) du moteur (11) ; l'équipement auxiliaire comporte un arbre d'entrée (20) qui est entraîné en rotation par le vilebrequin (12) du moteur à combustion (11), et qui entraîne deux arbres de sortie (22,30) de l'équipement auxiliaire en sens opposés et dont un premier arbre de sortie (22) entraîne en rotation un premier arbre d'équilibrage (24) du moteur (11), et caractérisé en ce que le second arbre de sortie (30) de l'équipement auxiliaire entraîne en rotation le deuxième arbre d'équilibrage (32) dans un sens opposé au sens de rotation du premier arbre d'équilibrage (24).

## Description

L'invention concerne un perfectionnement pour l'entraînement du système d'équilibrage d'un moteur à combustion interne de véhicule automobile.

Généralement, un moteur à combustion comporte des arbres d'équilibrage, par exemple deux, destinés à atténuer les vibrations du moteur en équilibrant les mouvements alternatifs des pistons.

L'un des deux arbres d'équilibrage doit tourner dans un sens opposé au sens de rotation du vilebrequin du moteur.

Cette inversion du sens de rotation est obtenue par un mécanisme d'inversion du sens de rotation.

Une première solution connue propose de faire appel à des combinaisons d'engrenages, de courroies et/ou de poulies.

Ces dispositifs présentent les inconvénients d'être encombrants et onéreux.

On a déjà proposé dans le document FR-A-2.279.982 un système utilisant la pompe à huile du moteur pour en faire un double usage.

La pompe à huile comporte un arbre d'entrée entraîné en rotation par le vilebrequin du moteur qui entraîne deux arbres internes de la pompe à huile en sens opposés. Un premier arbre interne de la pompe à huile entraîne en rotation un premier arbre d'équilibrage du moteur.

Grâce à cet équipement auxiliaire on profite de l'inversion du sens de rotation de l'arbre d'entrée de la pompe à huile par rapport à celui des deux arbres internes utilisés comme arbres de sortie.

Néanmoins pour l'entraînement de l'autre arbre d'équilibrage du moteur ce système fait appel au vilebrequin.

L'invention vise à proposer un système notamment plus simple et plus compact.

Dans ce but l'invention propose un système d'équilibrage d'un moteur à combustion du type comportant :
- deux arbres d'équilibrage des vibrations du moteur ;
- des moyens d'entraînement en rotation en sens opposés des deux arbres d'équilibrage par l'intermédiaire d'un équipement auxiliaire du moteur ; l'équipement auxiliaire comportant un arbre d'entrée qui est entraîné en rotation par le vilebrequin du moteur et qui entraîne deux arbres internes de l'équipement auxiliaire en sens opposés et dont un premier arbre interne entraîne en rotation un premier arbre d'équilibrage du moteur, caractérisé en ce que le second arbre interne de l'équipement auxiliaire entraîne en rotation le deuxième arbre d'équilibrage dans un sens opposé au sens de rotation du premier arbre d'équilibrage.

Selon d'autres caractéristiques de l'invention :
- l'équipement auxiliaire est une pompe dont les deux arbres internes entraînent chacun un élément de pompage ;
- le premier arbre interne comporte un premier tronçon d'extrémité proximale qui constitue l'arbre d'entrée de l'équipement auxiliaire et un deuxième tronçon d'extrémité distale qui constitue un premier arbre de sortie de l'équipement auxiliaire qui entraîne le premier arbre d'équilibrage ;
- le deuxième arbre interne comporte un tronçon d'extrémité distale qui constitue un deuxième arbre de sortie qui entraîne le deuxième arbre d'équilibrage ;
- chaque arbre d'équilibrage est entraîné indirectement au moyen d'un dispositif de transmission tel qu'une chaîne, une courroie ou une cascade de pignons ;

D'autres caractéristiques et avantages apparaîtront au cours de la lecture de la description détaillée qui va suivre pour la compréhension de laquelle on se reportera aux dessins annexés dans lesquels :
- la figure 1 est un schéma qui illustre une pompe à huile dans son environnement moteur et ses liaisons avec les deux arbres d'équilibrage et le vilebrequin ;
- la figure 2 est un schéma en section qui représente en détail la structure intérieure de la pompe à huile de la figure 1 avec son arbre d'entrée et ses deux arbres de sortie ;

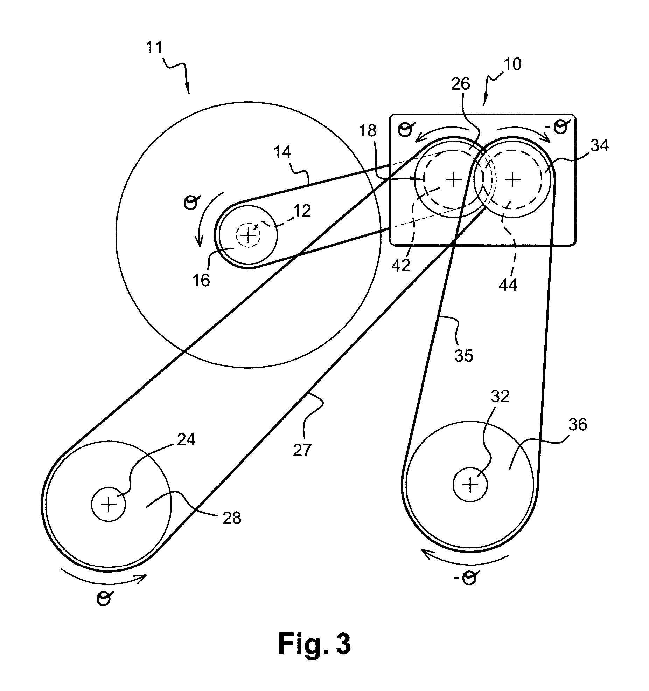

- la figure 3 est un schéma représentant le système d'équilibrage vu en bout ;

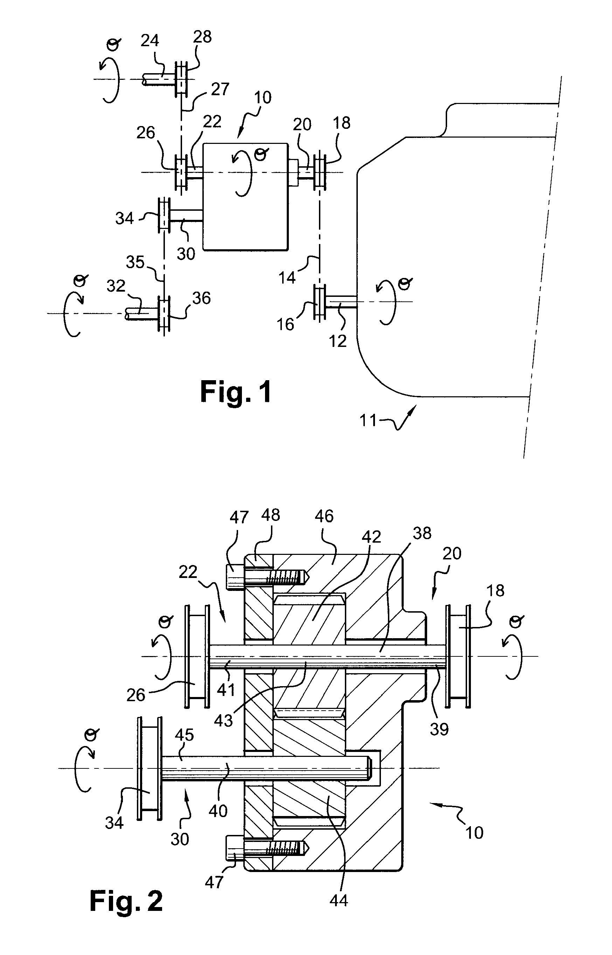

On a représenté à la figure 1 un moteur à combustion interne 11 de véhicule automobile équipé notamment d'une pompe à huile 10 comportant un arbre d'entrée 20 d'un côté et deux arbres de sortie 22 et 30 du côté opposé, tous ces arbres étant d'axes parallèles.

L'arbre d'entrée 20 de la pompe à huile 10 est entraîné dans un sens de rotation θ par le vilebrequin 12 du moteur 11, ici au moyen d'une chaîne de transmission 14 et de pignons d'entraînement 16 et 18.

Un premier arbre de sortie 22 de la pompe à huile 10 entraîne en rotation un premier arbre d'équilibrage 24, ici au moyen de pignons 26 et 28 et d'une courroie 27. Le premier arbre d'équilibrage 24 tourne dans le sens θ.

Un second arbre de sortie 30 de la pompe à huile 10 entraîne en rotation un second arbre d'équilibrage 32 au moyen de pignons 34 et 36 et d'une courroie 35. Le second arbre d'équilibrage 32 tourne dans le sens -θ.

La pompe à huile 10 modifiée à cet effet est par exemple une pompe à engrenages comportant un premier arbre interne 38 et un deuxième arbre interne 40 d'axes parallèles.

Les deux arbres internes 38 et 40 sont logés dans un carter 46 et fermé par un couvercle 48. Le couvercle 48 est fixé au carter 46 grâce à des vis 47 qui le traversent.

Chaque arbre porte et entraîne en rotation un pignon ou un engrenage de pompage 42 et 44.

Les deux arbres internes 38 et 40 sont parallèles et guidés en rotation de part et d'autre des pignons de pompage 42 et 44.

Le pignon de pompage 42 du premier arbre interne 38 engrène avec le pignon de pompage 44 du second arbre interne 40. Ainsi les deux arbres internes 38 et 40 tournent dans des sens opposés θ et -θ respectivement. Le tronçon d'extrémité proximale 39, à droite du premier arbre interne 38 constitue l'arbre d'entrée 20 de la pompe à huile 10 et est lié en rotation au pignon d'entraînement 18. Le tronçon d'extrémité distale 41, à gauche du premier arbre interne 38, constitue le premier arbre de sortie 22 de la pompe à huile 10 et est lié en rotation au pignon d'entraînement 26. Le pignon de pompage 42 est situé entre les deux tronçons d'extrémités 39 et 41 du premier arbre interne 38 et est solidaire en rotation du tronçon central 43 intermédiaire de ce dernier.

Le tronçon d'extrémité distale 45 du second arbre interne 40 constitue l'arbre de sortie 30 de la pompe à huile 10 et est liée en rotation au pignon d'entraînement 34.

Lors du fonctionnement, le pignon de pompage 42 du premier arbre interne 38 est entraîné en rotation par l'arbre d'entrée 20 dans le sens θ et engrène avec le pignon de pompage 44 du second arbre interne 40 qui est entraîné en rotation dans le sens -θ. Ainsi la pompe à huile 10 remplit son rôle premier, à savoir l'alimentation du moteur 11 en huile. La pompe à huile 10 permet aussi l'entraînement en rotation dans des sens opposés des deux arbres de sortie 30 et 22 qui eux-mêmes entraînent en rotation les arbres d'équilibrage 32 et 24.

## Revendications

1. Système d'équilibrage d'un moteur à combustion (11) du type comportant :
- deux arbres d'équilibrage (24,32) des vibrations du moteur (11);
- des moyens d'entraînement en rotation en sens opposés des deux arbres d'équilibrage (24,32) par l'intermédiaire d'un équipement auxiliaire du moteur (11) ;
l'équipement auxiliaire comportant un arbre d'entrée (20) qui est entraîné en rotation par le vilebrequin (12) du moteur à combustion (11) et qui entraîne deux arbres internes (38,40) de l'équipement auxiliaire en sens opposés et dont un premier arbre interne (38) entraîne en rotation un premier arbre d'équilibrage (24) du moteur (11), **caractérisé en ce que** le second arbre interne (40) de l'équipement auxiliaire entraîne en rotation le deuxième arbre d'équilibrage (32) dans un sens opposé au sens de rotation du premier arbre d'équilibrage (24).

2. Système d'équilibrage selon la revendication 1, **caractérisé en ce que** l'équipement auxiliaire est une pompe (10) dont les deux arbres internes (38,40) entraînent chacun un élément de pompage (42,44).

3. Système d'équilibrage selon l'une des revendications 1 ou 2, **caractérisé par le fait que** le premier arbre interne (38) comporte un premier tronçon d'extrémité proximale (39) qui constitue l'arbre d'entrée (20) de l'équipement auxiliaire et un deuxième tronçon d'extrémité distale (41) qui constitue un premier arbre de sortie (22) de l'équipement auxiliaire qui entraîne le premier arbre d'équilibrage (24).

4. Système d'équilibrage selon l'une des revendications 1 à 3, **caractérisé par le fait que** le deuxième arbre interne (40) comporte un tronçon d'extrémité distale (45) qui constitue un deuxième arbre de sortie (30) qui entraîne le deuxième arbre d'équilibrage (32).

5. Système d'équilibrage selon l'une des revendications 1 à 4, **caractérisé par le fait que** chaque arbre d'équilibrage est entraîné en rotation indirectement au moyen d'un dispositif de transmission tel qu'une chaîne, une courroie ou une cascade de pignons.
